# EUROPÄISCHE PATENTSCHRIFT

(11) **EP 2 949 958 B1**
(45) Veröffentlichungstag und Bekanntmachung des Hinweises auf die Patenterteilung: **17.10.2018**
(21) Anmeldenummer: 15168541.9
(22) Anmeldetag: 20.05.2015
(51) Int. Cl.: F16D 55/226, F16D 65/56

(54) **SCHEIBENBREMSE FÜR EIN NUTZFAHRZEUG**
DISC BRAKE FOR A COMMERCIAL VEHICLE
FREIN À DISQUE POUR UN VÉHICULE UTILITAIRE

(30) Priorität: 22.05.2014 DE 102014107224
(43) Veröffentlichungstag der Anmeldung: 02.12.2015
(73) Patentinhaber: KNORR-BREMSE Systeme für Nutzfahrzeuge GmbH, 80809 München (DE)
(72) Erfinder: Klingner, Matthias, 82272 Moorenweis (DE); Weber, Ralf, 80992 München (DE); Scheufler, Christian, 80807 München (DE)

(56) Entgegenhaltungen:
- EP-A1- 2 557 331
- EP-A1- 2 685 124
- DE-A1-102011 115 466
- DE-A1-102011 119 768
- DE-A1-102012 108 682
- DE-A1-102012 111 171

## Beschreibung

Die Erfindung betrifft eine Scheibenbremse für ein Nutzfahrzeug nach dem Oberbegriff des Anspruchs 1.

In der DE 10 2011 115 114 A1 ist eine derartige Scheibenbremse geoffenbart, bei der in einem Bremssattel ein Bremshebel angeordnet ist, der bei einer Bremsung mittels eines Bremszylinders auf eine gleichfalls im Bremssattel positionierte Brücke derart einwirkt, dass diese, bezogen auf die Drehachse einer Bremsscheibe, axial in deren Richtung bewegt wird.

Dabei sind in der Brücke zwei Stellspindeln gelagert, die endseitig, also auf der der Bremsscheibe zugewandten Seite, jeweils ein Druckstück aufweisen, die an einem Bremsbelag anliegen und mit denen bei einer Bremsung der Bremsbelag gegen die Bremsscheibe gepresst wird.

Die Stellspindeln stehen in Korrespondenz mit einer Nachstelleinrichtung, durch die zum Ausgleich eines verschleißbedingten Lüftspiels zwischen der Bremsscheibe und dem Bremsbelag die in der Brücke verdrehbar gehaltenen Stellspindeln so weit zugestellt werden, dass das Lüftspiel im Wesentlichen konstant bleibt, wobei ein an einer Stellspindel angeordneter Nachsteller über ein Antriebselement vom Bremshebel im Sinne einer Verdrehung angetrieben wird.

Dieser Nachsteller greift lediglich an einer Stellspindel an, so dass für eine erforderliche synchrone Verstellung beider Stellspindeln zur gleichmäßigen Nachstellung des Bremsbelages eine Synchronisiereinrichtung vorgesehen ist.

Über einen Zugmitteltrieb der Synchronisiereinrichtung wird die Drehbewegung von der einen Stellspindel auf die andere synchron übertragen, wobei als Zugmittel unter Bildung von zwei Trumen Gliederketten oder Lochbänder zum Einsatz kommen, die umlaufend um verdrehfest mit jeweils einer der Stellspindeln verbundene Treibräder geführt sind,.

Mit zunehmender Betriebsdauer kann sich jedoch das Zugmittel recken, woraus sich ein Übertragungsspiel ergibt, durch das die synchrone Verstellung der beiden Stellspindeln nicht mehr in dem gewünschten Maß gegeben ist. Dieses Problem kann auch bei einem vorhandenen Spiel zwischen dem Nachsteller und einem Mitnehmer auftreten, der in die als Hülse ausgebildete Stellspindel eingreift.

Neben dem Recken wird durch den Kettenspanner vor allem der Toleranzausgleich vorgenommen. Dieser ist begründet durch die Fertigungstoleranzen der Kettenführung und kann ohne Spannelement dazu führen, dass die Kette einen Kettenradzahn überspringt und somit die Einheit asynchron wird.

In der Folge kann es zu einem ungleichmäßigen Verschleiß des Reibbelages kommen, wobei das genannte Lüftspiel, d.h. der Abstand zwischen der Bremsscheibe und dem Reibbelag, bei unbetätigter Bremse ungleichmäßig ist und der Reibbelag bei einer Bremsung nicht mehr vollflächig an der Bremsscheibe anliegt, so dass sich ein Schrägverschleiß und damit eine Reduzierung der Standzeit ergibt.

In der DE 10 2011 115 114 A1 wird deshalb vorgeschlagen, ein Spannelement einzusetzen, das einseitig an einem der beiden Trume des Zugmittels anliegt und in Richtung des anderen Trums im Sinne eines Spannens wirkt. Dabei ist dieses Spannelement an einem Verschlussdeckel befestigt, mit dem die Synchronisiereinrichtung, also der außenseitig am Bremssattel angeordnete Zugmitteltrieb überdeckt wird.

In der DE 10 2012 108682 A1 ist eine Scheibenbremse thematisiert, bei der das Zugmittel durch Seitenausnehmungen von an der Brücke befestigten Lagerböcken geführt ist, wobei diese Seitenausnehmungen Einlaufrundungen aufweisen, wodurch eine Vorspannung des Zugmittels erfolgt.

Der Erfindung liegt die Aufgabe zugrunde, eine Scheibenbremse der gattungsgemäßen Art so weiterzuentwickeln, dass ihre Funktions- und Betriebssicherheit verbessert und die Standzeit der Bremsbeläge verlängert wird.

Diese Aufgabe wird durch eine Scheibenbremse mit den Merkmalen des Anspruchs 1 gelöst.

Ein kombinierter Form- und Kraftschluss zwischen dem Zugmittel und der Spanneinrichtung spannt die Spanneinrichtung zwischen Zugmittel und der Brücke selbstverriegelnd ein.

Prinzipiell ist damit eine dauerhafte und von äußeren Bedingungen nicht beeinflussbare Synchronbewegung der beiden Stellspindeln gewährleistet.

Die Spanneinrichtung weist mindestens ein Spannelement auf, das in der Brücke verschwenkbar befestigt ist und federnd am Zugmittel anliegt.

Nach einer vorteilhaften Weiterbildung der erfindungsgemäßen Spannelemente ist zumindest der am Zugmittel anliegende Bereich, der als Blattfeder vorliegt, in seiner Breite so bemessen, die der axialen Längen der Rollen einer Rollenkette entspricht, so dass dieser Anlagebereich ausschließlich an den Rollen anliegt, wodurch die Reibung zwischen dem Spannelement und der Rollenkette erheblich reduziert wird.

Bevorzugt ist dabei das Spannelement im Anlagebereich mit dem Zugmittel konvex geformt, so dass sich im Wesentlichen lediglich eine lineare Anlage des Spannelementes ergibt.

Ein weiterer Gedanke der Erfindung sieht vor, jedes Spannelement mit einer integrierten Spannhülse zu versehen, die in einer Bohrung der Brücke verschwenkbar und axial fixiert gehalten ist
Die Spannhülse ist mit einem durchgehenden Längsschlitz versehen und weist einen Umschlingungswinkel > 180 ° um eine Mittenachse auf.

Weiterhin ist die Spannhülse mit einem Körper verbunden, wobei sich an den Körper ein am Zugmittel anliegender Spannarm und gegengerichtet dazu ein Stützarm anschließt, der an einer Stützfläche der Brücke anliegt.

Der Spannarm und der Stützarm sind in Längsrichtung des Zugmittels entgegengesetzt ausgerichtet, wobei der Spannarm den erwähnten konvexen Anlagebereich zum Zugmittel aufweist, während der Stützarm an einer Stützfläche der Brücke anliegt.

Eine axiale Verschiebesicherung des Spannelementes in die eine Richtung wird durch eine Abstufung der Stützfläche der Brücke erreicht, an der der Stützarm anliegt und in die andere Richtung durch den kraftschlüssig an den Rollen, zumindest an einer Rolle, der Rollenkette anliegenden Spannarm, dessen seitliche Begrenzung als Formschluss durch die Rollen miteinander verbindende Laschen der Rollenkette gegeben ist. Damit ist das jeweilige Spannelement zwischen dem Zugmittel und der Brücke selbstverriegelnd eingespannt.

Weiter können, wenn, wie bevorzugt, zwei separate Spannelemente vorgesehen sind, diese spiegelbildlich ausgebildet sein, wodurch sie in einem Arbeitsschritt und in einem Werkzeug hergestellt werden können. Die beiden Spannelemente sind spiegelsymmetrisch zu einer der Mittenachse der integrierten Spannhülse senkrechten Ebene geformt. Naturgemäß trägt dies zu einer äußerst kostengünstigen Realisierung der Erfindung bei. In diesem Sinne ist auch der nun mögliche Verzicht auf besondere Befestigungselemente zu bewerten, da die Spannelemente, wie erwähnt, selbstverriegelnd durch Formschluss mittels der Halterung des Spannarms zwischen zwei Laschen der Rollenkette und durch Kraftschluss durch die Federkraft des Spannarms zwischen Rollen der Rollenkette und Anlageabschnitt gehalten sind.

Nach einer vorteilhaften Weiterbildung der Erfindung liegen die Spannarme im Einlauf- bzw. Auslaufbereich des Zugmittels zu den Treibrädern an. Damit wird in jedem Fall sichergestellt, dass zwischen den Treibrädern und dem Zugmittel kein durch Reckung bewirkter Schlupf entsteht. Dies bewirkt auch eine rüttelsichere Anlage des Zugmittels, so dass der Formschluss zwischen den Treibrädern und dem Zugmittel dauerhaft gewährleistet ist.

Zur einfachen Bereitstellung der neuen Spanneinrichtung ist lediglich die plane Anlagefläche für den Stützarm sowie eine Bohrung für die Spannhülse erforderlich, jeweils bezogen auf eines der separaten Spannelemente.

Die auf das Zugmittel wirkende Spannkraft des Spannarms wird im Wesentlichen bestimmt von der Winkelstellung des Stützarms zum Spannarm, d.h., je kleiner der Winkel gegenüber einer gestreckten Lage wird, desto größer ist die auf das Zugmittel wirkende Spannkraft.

Für eine Montage des Zugmitteltriebs, d.h. des Zugmittels und der Treibräder, die als Baueinheit gemeinsam an der Brücke befestigt werden, muss der Spannarm des jeweiligen Spannelementes in eine Position verschwenkt werden, in der die Einheit Treibräder/Zugmittel ungehindert in die Brücke eingesetzt werden kann, wobei die Spannelemente bereits eingesetzt sind und der Stützarm an der Stützfläche der Brücke anliegt.

Zum Verschwenken des Spannarms in eine Nichteingriffsstellung ist darin eine Öffnung, beispielsweise ein Langloch, vorgesehen, in die ein Montagewerkzeug greift, mit dem der Spannarm von der Brückenkontur wegzuziehen ist.

Damit ist eine Montage mit geschlossener Rollenkette möglich, unter Verzicht auf die Verwendung eines Verschlussgliedes.

In einer Vormontage kann der Zugmitteltrieb, einschließlich der Treibräder und des Zugmittels sowie der Spanneinrichtung gemeinsam mit der Brücke zu einer Baueinheit komplettiert werden, die im Folgenden in den Bremssattel der Scheibenbremse einsetzbar ist.

In einer alternativen Ausführung kann die Spannhülse des Spannelementes mit einem Körper verbunden sein, wobei sich an den Körper ein Spannarm mit einem an der Brücke an einer Stützfläche anliegenden Stützabschnitt anschließt, wobei der Stützabschnitt mit einem am Zugmittel anliegenden Federarm verbunden ist. So kann die Spanneinrichtung mit nur einem Spannelement versehen sein.

Auch hier kann die Stützfläche durch eine Abstufung gebildet sein, wobei der Stützabschnitt an der Stirnfläche der abgestuften Stützfläche anliegt.

In dieser alternativen Ausführung kann der Federarm ebenfalls einen in Richtung des Zugmittels konvex gebogenen Anlageabschnitt aufweisen, der am Zugmittel kraftschlüssig anliegt. Hierbei kann der Anlageabschnitt an mindestens einer Rolle des Zugmittels kraftschlüssig anliegen.

Ein axialer Anschlag ist in einfacher Weise gebildet, wenn der Federarm zumindest im Bereich des Anlageabschnitts in seiner Breite der Länge einer Rolle des Zugmittels entspricht, wenn dieses als Rollenkette ausgebildet ist, wobei die Rollen miteinander verbindenden Laschen einen axialen Anschlag für einen Formschluss des mindestens einen Spannelementes bilden.

Die Spannhülse des Spannelementes kann zudem mit einem Passstift reibschlüssig verbunden verschwenkbar in die Bohrung der Brücke eingesetzt sein, was eine Halterung in der Bohrung verbessert. Weiterhin kann der Passstift mit seinem in der Bohrung befindlichen Ende eine zusätzliche axiale Sicherung des mindestens einen Spannelementes bilden.

Weitere vorteilhafte Ausbildungen der Erfindung sind in den Unteransprüchen gekennzeichnet.

Die Erfindung ergibt u.a. folgende Vorteile.
- Selbstverriegelndes Montagekonzept erfordert keine weiteren Anbauteile.
- Optimierte Lagerung der Spannelemente in der Brücke umfasst lediglich eine plane Anschlagfläche bzw. Stützfläche und eine Bohrung pro Spannelement.
- Rüttelsichere Auslegung aufgrund der sich selbst verstärkenden Geometrie der Spannelemente. Massenkräfte wirken gegen die Vorspannkraft.
- Vereinfachte Montage, da durch Herunterziehen beider Kettenspanner über die dafür vorgesehenen Öffnungen in den Federarmem, diese aufklappen und die Kette zusammen mit den Kettenrädern als Unterbaugruppe eingefädelt werden kann.

Ein Ausführungsbeispiel der Erfindung wird nachfolgend anhand der beigefügten Zeichnungen beschrieben.

Es zeigen:
- Figur 1: eine Scheibenbremse nach der Erfindung in einer geschnittenen Draufsicht
- Figur 2: die Scheibenbremse in einer entsprechend der Linie II-II in Figur 1 geschnittenen Seitenansicht
- Figur 3: einen Teil einer erfindungsgemäßen Scheibenbremse in einer Explosionsdarstellung
- Figur 4: den Teil der Scheibenbremse nach Figur 3 in einer perspektivischen Ansicht in montierter Stellung
- Figur 5: eine Seitenansicht des Teils nach Figur 4
- Figur 6: einen Schnitt durch den Teil gemäß der Linie VI-VI in Figur 5
- Figur 7: einen Schnitt durch den Teil gemäß der Linie VII-VII in Figur 5
- Figur 8: eine schematische, perspektivische Darstellung eines ersten Ausführungsbeispiels einer erfindungsgemäßen Spanneinrichtung mit zwei Spannelementen
- Figur 9: den Teil der Scheibenbremse nach Figur 3 in einer perspektivischen Ansicht in montierter Stellung mit einem zweiten Ausführungsbeispiel der erfindungsgemäßen Spanneinrichtung mit zwei Spannelementen
- Figur 10: eine schematische, perspektivische Darstellung des zweiten Ausführungsbeispiels der erfindungsgemäßen Spanneinrichtung mit einem Spannelement nach Figur 9.

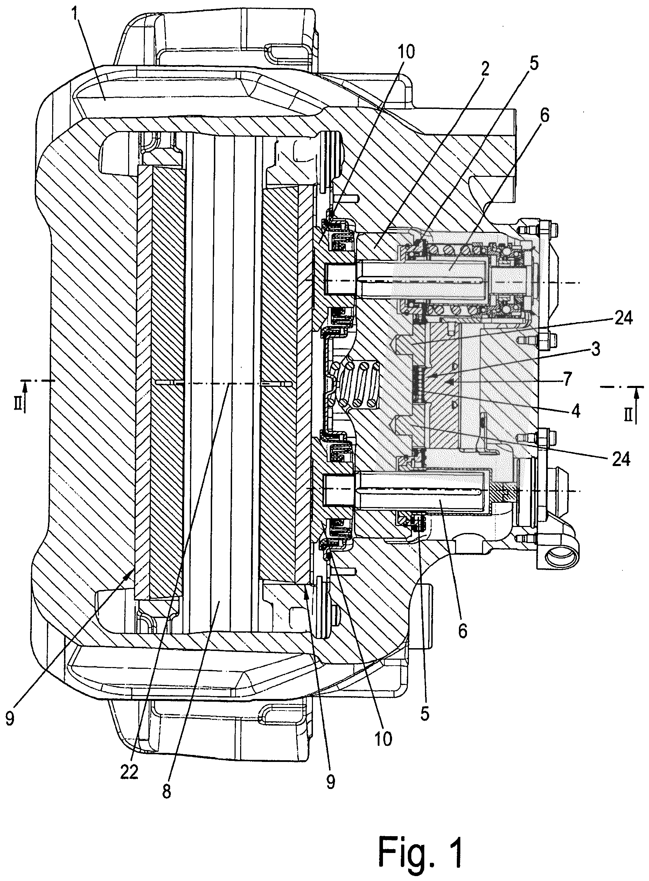

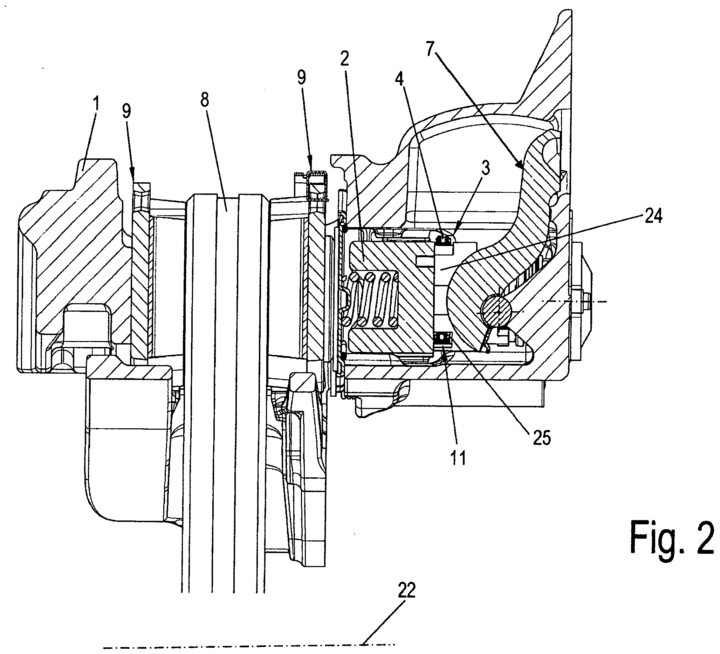

Die Figuren 1 und 2 zeigen eine Scheibenbremse, die einen Bremssattel 1 aufweist, der eine um eine Bremsscheibenachse 22 (Fig. 2) drehbare Bremsscheibe 8 übergreift, wobei der Bremssattel 1 als Schiebesattel ausgebildet ist.

Beidseitig der Bremsscheibe 8 ist jeweils ein Bremsbelag 9 angeordnet, die bei einer Bremsung gegen die Bremsscheibe 8 pressbar sind.

Hierzu wird ein Bremshebel 7 gegen eine Brücke 2 gedrückt, in der verdrehbar Stellspindeln 6 gelagert sind, die an dem dem zugeordneten Bremsbelag 9 zugewandten Ende jeweils mit einem Druckstück 10 versehen sind, das im Falle einer Bremsung den Bremsbelag 9 kontaktiert. Der Bremshebel 7 steht mit der Brücke 2 über einen Lagerkörper 24 in Verbindung, welcher hier zwei Lagerschalen aufweist.

Zum Ausgleich eines verschleißbedingt sich verändernden Lüftspiels, des Abstands zwischen dem Bremsbelag 9 und der Bremsscheibe 8, ist eine Nachstelleinrichtung vorgesehen, mit der bei Betätigung des Bremshebels 7 eine Verdrehung der Stellspindeln 6 in Richtung der Bremsscheibe 8 erfolgt.

Zur gleichmäßigen Verstellung beider parallel und abständig zueinander angeordneter Stellspindeln 6 ist eine Synchronisiereinrichtung vorgesehen, mit einem Zugmitteltrieb 3, der Treibräder 5 in Form von Kettenrädern aufweist, von denen jeweils eines verdrehsicher mit einer der Stellspindeln 6 verbunden ist.

Zur synchronen Verstellung ist auf den Treibrädern 5 ein Zugmittel 4 in Form einer Rollenkette auf den Treibrädern 5 geführt. Der Zugmitteltrieb 3, also die Treibräder 5 und das Zugmittel 4 sind an der Brücke 2 angeordnet und zwar auf der dem Bremshebel 7 zugewandten Seite.

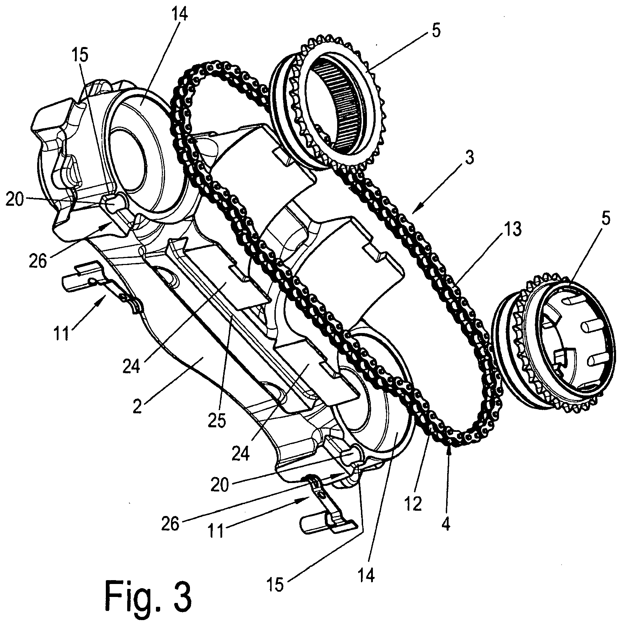

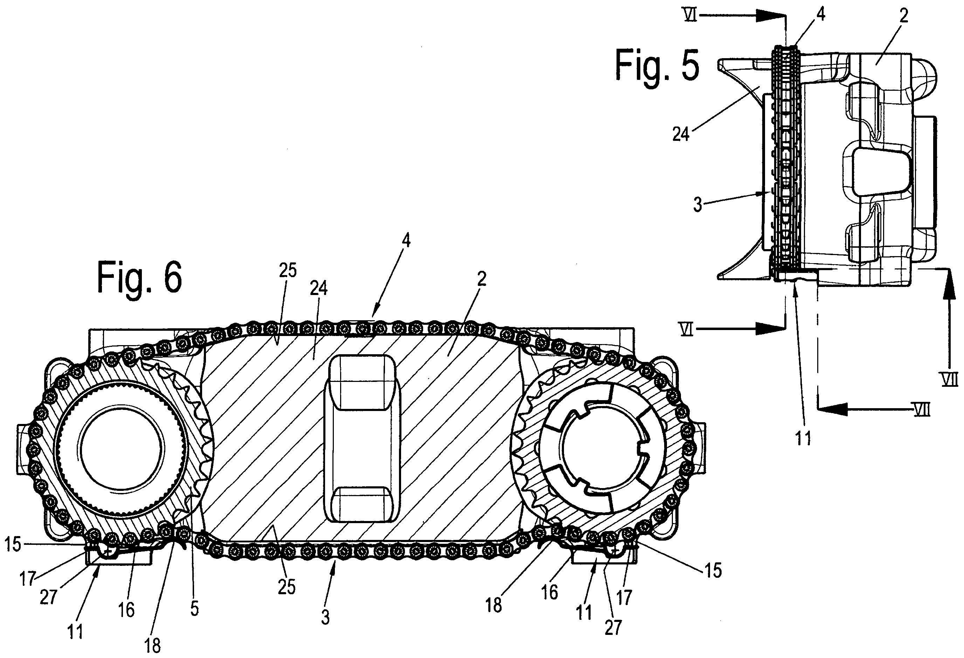

In den Figuren 3-6 ist die Brücke 2 mit angeschlossenem Zugmitteltrieb 3 als Einzelheit dargestellt, wobei insbesondere in der Figur 3 zu erkennen ist, dass die Treibräder 5 in Aufnahmebohrungen 14 der Brücke 2 verschwenkbar gelagert sind.

Das Zugmittel 4 wird an den Längsseiten der Brücke 2 in Führungsnuten 25, welche an beiden Längsseiten des Lagerkörpers 24 eingeformt sind, geführt und im eingebauten Zustand in axialer Richtung, d.h. in einer Richtung parallel zu der Bremsscheibenachse 22, gehalten. Dieses Halten erfolgt in zwei gegensätzlichen axialen Richtungen, nämlich in Richtung auf die Bremsscheibe 8 und von dieser weg in Richtung des Bremshebels 7 (siehe z.B. Figur 2). Der Lagerkörper 24 ist hier als separates Teil auf der Brücke 2 aufgebracht.

An dem Zugmittel 4 liegt eine Spanneinrichtung an, die in einem ersten Ausführungsbeispiel aus zwei separaten Spannelementen 11 besteht, die jeweils an der Brücke 2 verschwenkbar gelagert befestigt sind und federnd am Zugmittel 4 anliegen.

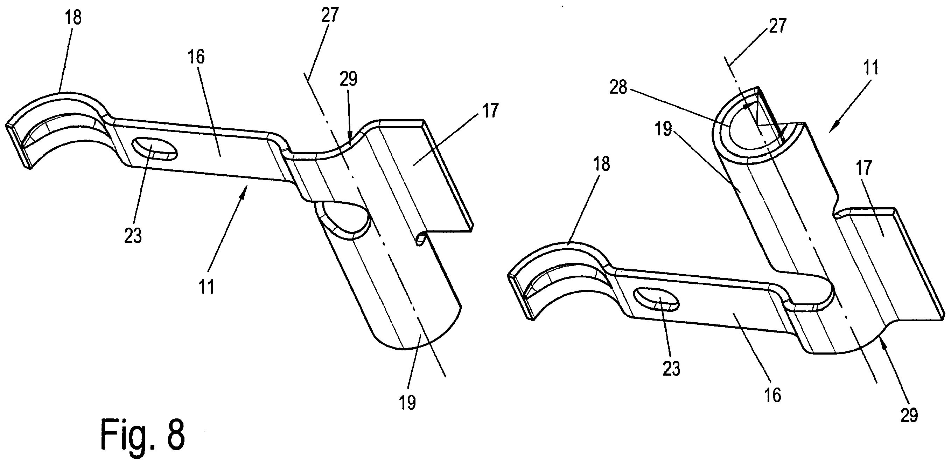

Dabei umfasst jedes Spannelement 11 eine, in der Figur 8 als Einzelheit dargestellte integrierte Spannhülse 19, welche in Verlängerung mit einem Körper 29 verbunden ist. Spannhülse 19 und Körper 29 weisen eine Mittenachse 27 auf. Die Spannhülse 19 ist geschlitzt, wobei sie die Mittenachse 27 mantelartig in einem Umschlingungswinkel 28 umgibt. Der Umschlingungswinkel 28 ist in dem Beispiel größer als 180°.

Der Körper 29 bildet ein in etwa halbrundes Teil, an welchem an einer Seite ein sich seitlich erstreckender Stützarm 17 angeformt ist, dessen radiale Ausdehnung etwa zwei Drittel des Durchmessers der Spannhülse 19 beträgt. Eine axiale Breite des Stützarms 17, d.h. dessen Ausdehnung in einer Richtung parallel zu der Mittenachse 27, entspricht etwa der Hälfte der gesamten Länge in Richtung der Mittenachse 27 von Spannhülse 19 und Körper 29.

Entgegengesetzt zu dem Stützarm 17 erstreckt sich, an den Körper 29 angeformt, ein Spannarm 16, dessen freies Ende als Anlageabschnitt 18 in Richtung des Zugmittels 4 konvex geformt ist und der einen Durchbruch 23, z.B. ein Langloch, aufweist. Die Funktion wird unten noch erläutert. Eine auf die Mittenachse 27 bezogene axiale Ausdehnung bzw. Breite des Spannarms 16 ist in etwa halb so groß wie die axiale Ausdehnung bzw. Breite des Stützarms 17. Eine radiale Länge des Spannarms 16 ist etwa viermal so groß wie der Durchmesser der Spannhülse 19.

Der konvexe Anlageabschnitt 18 weist hier eine an seinem inneren Umfang angeformte Versteifung, z.B. eine Rippe, auf.

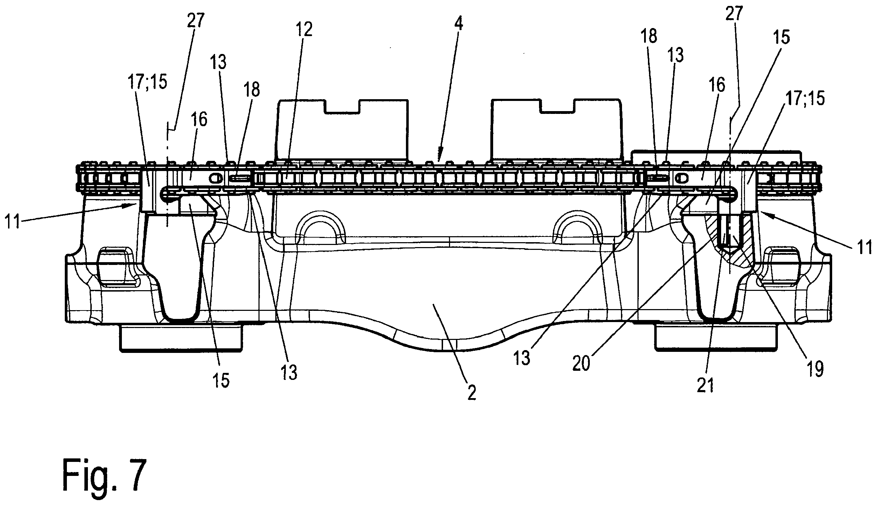

Jedes Spannelement 11 ist mit seiner Spannhülse 19 in eine Bohrung 20 (Figur 3) der Brücke 2 eingesteckt (Figur 7), in der Bohrung 20 gelagert und um die jeweilige Mittenachse 27, die auch eine Mittenachse der Bohrung 20 bildet, herum verschwenkbar.

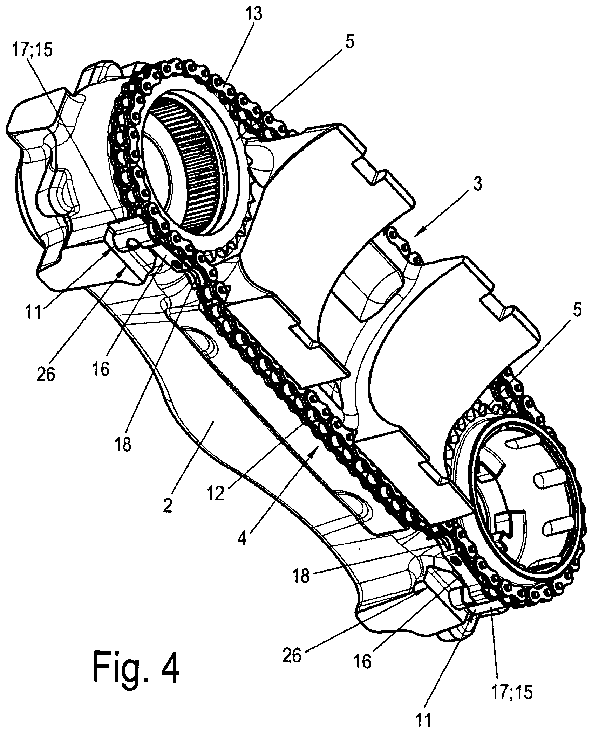

An der Brücke 2 ist neben jeder Bohrung 20 eine Stützfläche 15 eingeformt. Die Stützfläche 15 ist eine Seite einer Abstufung, z.B. hier eine gefräste L-förmige Kontur 26 (Figur 3 und 4), und zwar die Seite, welche sich in einer Richtung parallel zu der Bremsscheibenachse 22 erstreckt. Jede Stützfläche 15 steht in Kontakt mit dem jeweiligen Stützarm 17 eines Spannelementes 11 und bildet einen Festanschlag für das jeweilige Federelement 11 als Schwenkbegrenzung in eine Schwenkrichtung. So begrenzt die in Figur 4 links angeordnete Stützfläche 15 durch Anlage des Stützarms 17 des linken Spannelementes 11 eine Verschwenkung des linken Spannelementes 11 im Uhrzeigersinn, und bei dem rechten Spannelement 11 begrenzt die rechte Stützfläche 15 durch Anlage des Stützarms 17 des rechten Spannelementes 11 eine Verschwenkung des rechten Spannelementes 11 im Gegenuhrzeigersinn.

Über den, die Federwirkung eines jeden Spannelementes 11 bestimmenden langen Spannarm 16 werden die Spannelemente 11 unter das als Rollenkette ausgebildete Zugmittel 4 geklemmt und spannen deren Leertrum gegen die brückenseitigen Laufflächen der Führungskontur 25 der Rollenkette. Auf diese Weise wird die Verschwenkung eines jeden Federelementes 11 in die jeweilige Gegenrichtung (links in Figur 4 im Gegenuhrzeigersinn; rechts in Figur 4 im Uhrzeigersinn) begrenzt. Auf diese Weise sind die Spannelemente 11 im eingebauten Zustand verdreh- bzw. verschwenkgesichert eingespannt. Hierbei gilt das Hebelgesetz F1xL2 = F2xL2, wobei L1 ein Hebelarm des Stützarms 17, F1 eine Lagerkraft auf die brückenseitige Stützfläche 15, F2 eine Federkraft auf Leertrum und L2 ein langer Hebelarm des Spannarms 16 ist.

Axial wird die Position des jeweiligen Spannelementes 11 zum einen über die in die Brücke 2 jeweils eingeformte L-förmige Kontur 26 gesichert, deren abgewinkelte Seite, deren Fläche rechtwinklig zu der Stützfläche 15 verläuft, jeweils eine axiale Anlage für den Stützarm 17 bildet, so dass das Spannelement 11 in einer axialen Richtung, nämlich in der Richtung auf die Bremsscheibe 8 hin, formschlüssig gehalten ist.

Der Umschlingungswinkel 28 von größer als 180° der Spannhülsen 19 ermöglicht eine zusätzliche axiale Sicherung jeweils mittels eines Passstiftes 21. Der Passstift 21 ist in den verbleibenden Innendurchmesser der Geometrie der Spannhülse 19 eingepresst und kann mit seinem in der Bohrung 20 liegenden Ende am Boden der Bohrung 20 eine axiale Sicherung des jeweiligen Spannelementes 11 in Richtung auf die Bremsscheibe 8 hin bilden.

Die Figur 4 zeigt sehr deutlich, dass die aufeinander zu gerichteten Spannarme 16 der beiden Spannelemente 11 mit ihrem jeweiligen Anlageabschnitt 18 im Einlauf- bzw. Auslaufbereich des Zugmittels 4 zum Treibrad 5 hin am Zugmittel 4 anliegen.

Zur formschlüssigen Sicherung des Spannelementes 11 in die andere axiale Richtung, nämlich in Richtung auf den Bremshebel 7 hin, ist zumindest der Anlageabschnitt 18 in seiner Breite, d.h. in seiner Ausdehnung in Richtung der Mittenachse 29, entsprechend der axialen Länge von Rollen 12 des Zugmittels 4 abgemessen, an denen der Anlageabschnitt 18 anliegt, ausgebildet. Da Laschen 13 des Zugmitteltriebs 4, die die Rollen 12 miteinander verbinden, im Bereich der Rollen 12 breiter sind als deren Durchmesser, bilden sie einen beidseitigen Anschlag für den auf den Rollen 12 aufliegenden Anlageabschnitt 18.

Im Übrigen sind die beiden Spannelemente 11 derart angeordnet, dass sie am in montierter Stellung unteren Trum des Zugmittels 4 angreifen.

Für die Montage dient der Durchbruch 23 jeweils zum Einsetzen eines Montagewerkzeugs, mit dem der Spannarm 16 eines jeden Spannelementes 11 bei einer Montage des Zugmitteltriebs 3 aus seiner Spannposition heraus schwenkbar ist. Zur Montage des Zugmittels 4 werden die Spannarme 16 von der Brückenkontur weggezogen. Dabei bildet sich eine Öffnung, durch welche die geschlossene Rollenkette als Zugmittel 4 durchgeführt und dann zusammen mit den Treibrädern 5 montiert werden kann. Somit ist eine Montage mit geschlossener Rollenkette möglich und spart die Verwendung eines Verschlussgliedes ein.

Figur 8 zeigt eine schematische, perspektivische Darstellung eines ersten Ausführungsbeispiels einer erfindungsgemäßen Spanneinrichtung mit zwei Spannelementen.

Wie die Figur 8 deutlich wiedergibt, sind die beiden Spannelemente 11 spiegelbildlich bzw. spiegelsymmetrisch zu einer der Mittenachse 27 der integrierten Spannhülse 19 senkrechten Ebene geformt. Dadurch wird ein kombiniertes Stanzwerkzeug ermöglich, welches beide Spannelemente 11 gleichzeitig in einem Arbeitsschritt mit einem bleibenden Verbindungssteg ausstanzt. Der Verbindungssteg kann sehr dünn gestaltet werden, wodurch eine Trennung der beiden Spannelemente 11 in einem der letzten Herstellschritte durch einfache Verfahren (Biegen, Schneiden, Stanzen, etc.) erfolgen kann.

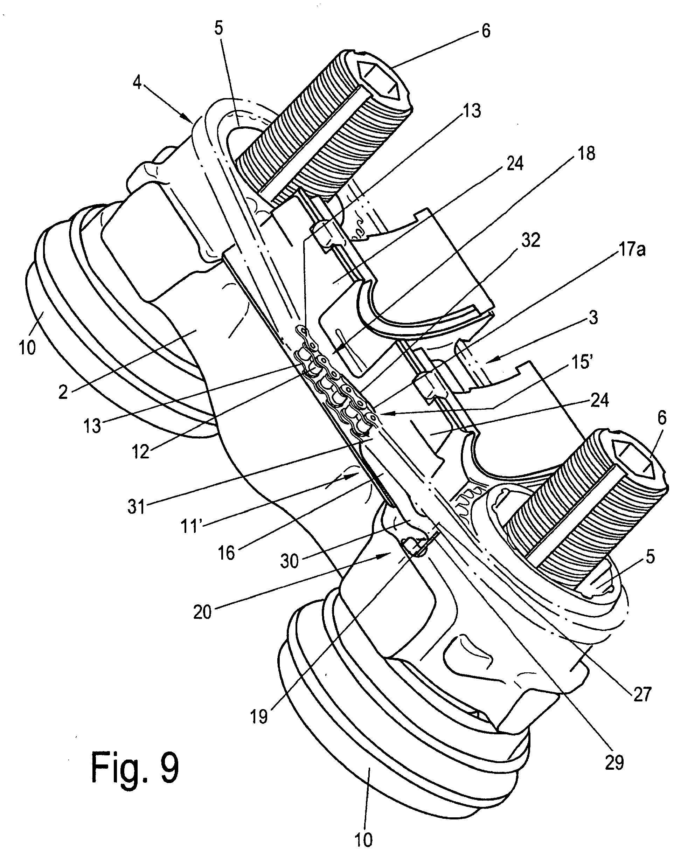

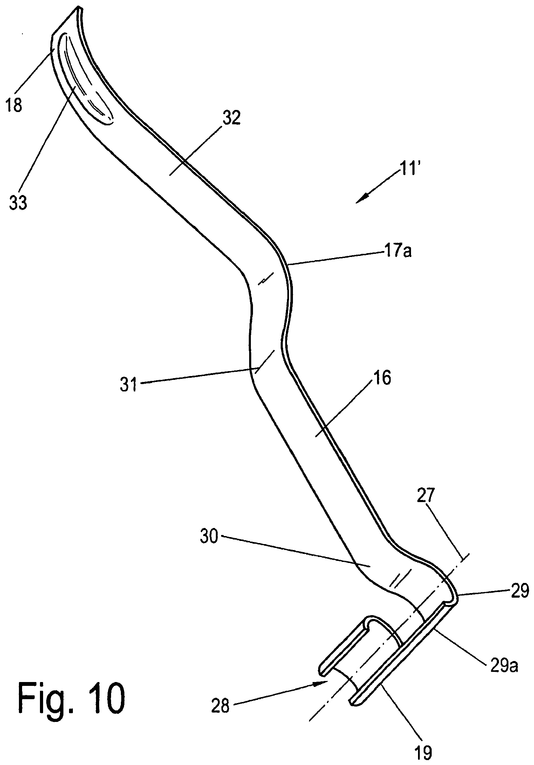

In Figur 9 ist der Teil der Scheibenbremse nach Figur 3 in einer perspektivischen Ansicht in montierter Stellung mit einem zweiten Ausführungsbeispiel der erfindungsgemäßen Spanneinrichtung mit einem Spannelement 11' gezeigt. Figur 10 zeigt eine schematische, perspektivische Darstellung des ersten Ausführungsbeispiels der erfindungsgemäßen Spanneinrichtung mit einem Spannelement 11' nach Figur 9.

Der Aufbau der Brücke 2, des Zugmitteltriebs 3, des Zugmittels 4, der Treibräder 5 und der Stellspindeln 6 ist im Zusammenhang mit Figur 4 oben schon ausführlich beschrieben und soll hier nicht wiederholt werden.

Im Unterschied zu dem ersten Ausführungsbeispiel zeigt Figur 9 das zweite Ausführungsbeispiel der Spanneinrichtung mit nur einem Spannelement 11'. Dieses eine Spannelement 11' ist an der Brücke 2 ebenfalls verschwenkbar in einer Bohrung 20 gelagert befestigt und liegt federnd am Zugmittel 4 jedoch etwa in der Mitte des unteren Trums angreifend zwischen den Stellspindeln 6 an, wobei eine Spannkraft des Spannelementes 11' das Zugmittel 4 nach außen drückend spannt. Mit dem Begriff "nach außen" ist hier eine Richtung von der Brücke 2 und dem Lagerkörper 24 weg weisend gemeint, wie in Figur 9 zu erkennen ist.

Die Bohrung 20 befindet sich an der Brücke 2 in etwa in der gleichen Position auf der rechten Seite in Figur 9 wie die Bohrung 20 in Figur 4.

Das Spannelemente 11' umfasst auch eine in der Figur 10 als Einzelheit dargestellte integrierte Spannhülse 19, welche in Verlängerung mit einem Körper 29 durch einen Verbindungsabschnitt 29a verbunden ist. Spannhülse 19 und Körper 29 weisen auch hier eine Mittenachse 27 auf. Die Spannhülse 19 ist ebenfalls geschlitzt, wobei sie die Mittenachse 27 mantelartig in einem Umschlingungswinkel 28 umgibt. Der Umschlingungswinkel 28 ist in diesem Beispiel ebenfalls größer als 180°.

Der Körper 29 des Spannelementes 11' bildet ein in etwa halbrundes Teil, an welchem nur an einer Seite der sich seitlich erstreckende Spannarm 16 über einen etwa viertelkreisförmigen Übergang 30 angeformt ist. Der viertelkreisförmige Übergang 30 weist eine Krümmung auf, welche der Krümmung des Körpers 29 entgegengesetzt ist.

Der Spannarm 16 erstreckt sich hier längs des Zugmittels 4 in Richtung auf den Körper der Brücke 2 hin, wobei er an dem Ende, das dem Übergang 30 gegenüber liegt, einen weiteren, etwa viertelkreisförmigen Übergang 31 aufweist, welcher in gleicher Krümmungsrichtung wie der Übergang 30 auf die Brücke 2 hin gebogen ist.

Die Krümmungsradien der Übergänge 30 und 31 sind in etwa gleichgroß und weisen eine Radius auf, der ungefähr demjenigen des Körpers 29 entspricht.

An den Übergang 31 schließt sich ein Stützabschnitt 17a an, welcher hier in entgegengesetzter Richtung bogenförmig gekrümmt mit einem in etwa dreimal so großen Radius wie der Übergang 31 ausgebildet ist. Dieser Stützabschnitt 17a liegt an einer Stützfläche 15' der Brücke 2 an. Die Stützfläche 15' kann unbearbeitet oder auch bearbeitet sein, um eine möglichst reibungsarme Oberfläche für den Stützabschnitt 17a zu bilden. Dabei kann die Stützfläche 15' auch eine Abstufung aufweisen, wobei der Stützabschnitt (17a) an der Stirnfläche der abgestuften Stützfläche (15') anliegt.

An dem Stützabschnitt 17a ist ein Federarm 32 angeformt, welcher sich von der Brücke 2 hinweg gegen das Zugmittel 4 erstreckt. Eine Länge des Federarms 32 entspricht in etwa einer Länge des Spannarms 16.

Das freie Ende des Federarms 32 ist als Anlageabschnitt 18 in Richtung des Zugmittels 4 konvex geformt. Eine auf die Mittenachse 27 bezogene axiale Ausdehnung bzw. Breite des Federarms 32 entspricht der axialen Ausdehnung bzw. Breite des Spannarms 16. Eine radiale Länge des Spannarms 16 ist etwa viermal so groß wie der Durchmesser der Spannhülse 19.

Der konvexe Anlageabschnitt 18 weist hier eine an seinem inneren Umfang angeformte Versteifung, z.B. eine Rippe 33, auf. Diese Rippe 33 kann auch an dem äußeren Umfang des konvexen Anlageabschnitts 18 liegen.

Das Spannelement 11' ist mit seiner Spannhülse 19 in die Bohrung 20 der Brücke 2 wie im Zusammenhang mit dem Spannelement 11 beschrieben eingesteckt.

Über den, die Federwirkung des Spannelementes 11' bestimmenden langen Spannarm 16 und Federarms 32 wird das Spannelement 11' unter das als Rollenkette ausgebildete Zugmittel 4 geklemmt und spannt deren Leertrum nach außen von den brückenseitigen Laufflächen der Führungskontur 25 der Rollenkette weg.

Der Umschlingungswinkel 28 von größer als 180° der Spannhülse 19 ermöglicht auch hier eine zusätzliche axiale Sicherung jeweils mittels eines Passstiftes 21 wie oben schon bei dem ersten Ausführungsbeispiel beschrieben.

Der Anlageabschnitt 18 liegt in etwa in der Mitte am Zugmittel 4 an mindestens einer Rolle 12 an und ist für eine formschlüssigen Sicherung des Spannelementes 11' in die andere axiale Richtung, nämlich in Richtung auf den Bremshebel 7 hin, zumindest in seiner Breite, d.h. in seiner Ausdehnung in Richtung der Mittenachse 29, entsprechend der axialen Länge von Rollen 12 des Zugmittels 4 abgemessen, an denen der Anlageabschnitt 18 anliegt, ausgebildet. Da Laschen 13 des Zugmitteltriebs 4, die die Rollen 12 miteinander verbinden, im Bereich der Rollen 12 breiter sind als deren Durchmesser, bilden sie auch hier einen beidseitigen Anschlag für den auf den Rollen 12 aufliegenden Anlageabschnitt 18.

### Bezugszeichenliste

- 1: Bremssattel
- 2: Brücke
- 3: Zugmitteltrieb
- 4: Zugmittel
- 5: Treibrad
- 6: Stellspindel
- 7: Bremshebel
- 8: Bremsscheibe
- 9: Bremsbelag
- 10: Druckstück
- 11, 11': Spannelement
- 12: Rolle
- 13: Lasche
- 14: Aufnahmebohrung
- 15, 15': Stützfläche
- 16: Spannarm
- 17: Stützarm
- 17a: Stützabschnitt
- 18: Anlageabschnitt
- 19: Spannhülse
- 20: Bohrung
- 21: Passstift
- 22: Bremsscheibenachse
- 23: Durchbruch
- 24: Lagerkörper
- 25: Führungskontur
- 26: Kontur
- 27: Mittenachse
- 28: Umschlingungswinkel
- 29: Körper
- 29a: Verbindungsabschnitt
- 30, 31: Übergang
- 32: Federarm
- 33: Rippe

## Patentansprüche

1. Scheibenbremse für ein Nutzfahrzeug, mit
a) einem eine Bremsscheibe (8) übergreifenden Bremssattel (1),
b) einer im Bremssattel (1) angeordneten Zuspanneinrichtung zum Andrücken von Bremsbelägen (9) an die Bremsscheibe (8),
c) mindestens zwei parallel und abständig zueinander angeordneten, in einer mittels der Zuspanneinrichtung betätigbaren Brücke (2) in Korrespondenzgewinden drehbar gelagerten Stellspindeln (6),
d) einer im Bremssattel (1) positionierten Nachstelleinrichtung, mit der über eine axiale Verstellung der Stellspindeln (6) eine verschleißbedingte Änderung eines Lüftspiels zwischen dem Bremsbelag (9) und der Bremsscheibe (8) im Wesentlichen ausgleichbar ist,
e) einer Synchronisiereinrichtung mit einem Zugmitteltrieb (3), mit dem die beiden Stellspindeln (6) synchron verstellbar sind und der ein Zugmittel (4) mit zwei Trumen aufweist, sowie zwei Treibräder (5), die verdrehsicher mit den Stellspindeln (6) verbunden sind und an denen das Zugmittel (4) form- oder reibschlüssig anliegt,
f) einer am Zugmittel (4) anliegenden Spanneinrichtung,
**dadurch gekennzeichnet, dass**
ein kombinierter Form- und Kraftschluss zwischen dem Zugmittel (4) und der Spanneinrichtung die Spanneinrichtung zwischen Zugmittel (4) und der Brücke (2) selbstverriegelnd einspannt.

2. Scheibenbremse nach Anspruch 1, **dadurch gekennzeichnet, dass** die Spanneinrichtung mindestens ein Spannelement (11, 11') aufweist, das in der Brücke (2) verschwenkbar befestigt ist und federnd am Zugmittel (4) anliegt.

3. Scheibenbremse nach Anspruch 2, **dadurch gekennzeichnet, dass** das mindestens eine Spannelement (11, 11') eine integrierte Spannhülse (19) aufweist, die in einer Bohrung (20) der Brücke (2) verschwenkbar und axial fixiert gehalten ist.

4. Scheibenbremse nach einem der Ansprüche 2 oder 3, **dadurch gekennzeichnet, dass** die Spannhülse (19) des Spannelementes (11, 11') mit einem durchgehenden Längsschlitz versehen ist und einen Umschlingungswinkel > 180 ° um eine Mittenachse (27) aufweist.

5. Scheibenbremse nach einem der Ansprüche 2 bis 4, **dadurch gekennzeichnet, dass** die Spannhülse (19) des Spannelementes (11) mit einem Körper (29) verbunden ist, wobei sich an den Körper (29) ein am Zugmittel (4) anliegender Spannarm (16) und gegengerichtet dazu ein Stützarm (17) anschließt, der an einer Stützfläche (15) der Brücke (2) anliegt.

6. Scheibenbremse nach Anspruch 5, **dadurch gekennzeichnet, dass** die Stützfläche (15) durch eine Abstufung gebildet ist, wobei der Stützarm (17) an der Stirnfläche der abgestuften Stützfläche (15) anliegt.

7. Scheibenbremse nach Anspruch 5 oder 6, **dadurch gekennzeichnet, dass** der Spannarm (16) einen in Richtung des Zugmittels (4) konvex gebogenen Anlageabschnitt (18) aufweist, der am Zugmittel (4) kraftschlüssig anliegt.

8. Scheibenbremse nach Anspruch 7, **dadurch gekennzeichnet, dass** der in Richtung des Zugmittels (4) konvex gebogene Anlageabschnitts (18) an mindestens einer Rolle (12) des Zugmittels (4) kraftschlüssig anliegt.

9. Scheibenbremse nach Anspruch 7 oder 8, **dadurch gekennzeichnet, dass** der Spannarm (16) zumindest im Bereich des Anlageabschnitts (18) in seiner Breite der Länge einer Rolle (12) des Zugmittels (4) entspricht, wenn dieses als Rollenkette ausgebildet ist, wobei die Rollen (12) miteinander verbindenden Laschen (13) einen axialen Anschlag für einen Formschluss des mindestens einen Spannelementes (11) bilden.

10. Scheibenbremse nach einem der Ansprüche 5 bis 9, **dadurch gekennzeichnet, dass** der Spannarm (16) einen Durchbruch (23) zum Eingriff eines Montagewerkzeugs zur Montage eines geschlossenen Zugmittels (4) aufweist.

11. Scheibenbremse nach einem der Ansprüche 2 bis 10, **dadurch gekennzeichnet, dass** bei Einsatz von zwei Spannelementen (11), von denen jeweils eines einem Treibrad (5) zugeordnet ist, die Spannelemente (11) spiegelbildlich ausgebildet sind.

12. Scheibenbremse nach Anspruch 11, **dadurch gekennzeichnet, dass** die beiden Spannelemente (11) spiegelsymmetrisch zu einer der Mittenachse (27) der integrierten Spannhülse (19) senkrechten Ebene geformt sind.

13. Scheibenbremse nach einem der Ansprüche 7 bis 12, **dadurch gekennzeichnet, dass** der Anlageabschnitt (18) des mindestens einen Spannelementes (11) im Einlauf- bzw. Auslaufbereich des Zugmittels (4) zum Treibrad (5) anliegt.

14. Scheibenbremse nach einem der Ansprüche 2 bis 4, **dadurch gekennzeichnet, dass** die Spannhülse (19) des Spannelementes (11') mit einem Körper (29) verbunden ist, wobei sich an den Körper (29) ein Spannarm (16) mit einem an der Brücke (2) an einer Stützfläche (15') anliegenden Stützabschnitt (17a) anschließt, wobei der Stützabschnitt (17a) mit einem am Zugmittel (4) anliegenden Federarm (32) verbunden ist.

15. Scheibenbremse nach Anspruch 14, **dadurch gekennzeichnet, dass** die Stützfläche (15') durch eine Abstufung gebildet ist, wobei der Stützabschnitt (17a) an der Stirnfläche der abgestuften Stützfläche (15') anliegt.

16. Scheibenbremse nach Anspruch 14 oder 15, **dadurch gekennzeichnet, dass** der Federarm (32) einen in Richtung des Zugmittels (4) konvex gebogenen Anlageabschnitt (18) aufweist, der am Zugmittel (4) kraftschlüssig anliegt.

17. Scheibenbremse nach Anspruch 16, **dadurch gekennzeichnet, dass** der in Richtung des Zugmittels (4) konvex gebogene Anlageabschnitt (18) an mindestens einer Rolle (12) des Zugmittels (4) kraftschlüssig anliegt.

18. Scheibenbremse nach Anspruch 16 oder 17, **dadurch gekennzeichnet, dass** der Federarm (32) zumindest im Bereich des Anlageabschnitts (18) in seiner Breite der Länge einer Rolle (12) des Zugmittels (4) entspricht, wenn dieses als Rollenkette ausgebildet ist, wobei die Rollen (12) miteinander verbindenden Laschen (13) einen axialen Anschlag für einen Formschluss des mindestens einen Spannelementes (11') bilden.

19. Scheibenbremse nach einem der Ansprüche 3 bis 18, **dadurch gekennzeichnet, dass** die Spannhülse (19) des mindestens einen Spannelementes (11, 11') mit einem Passstift (21) reibschlüssig verbunden verschwenkbar in die Bohrung (20) der Brücke (2) eingesetzt ist.

20. Scheibenbremse nach Anspruch 19, **dadurch gekennzeichnet, dass** der Passstift (21) mit seinem in der Bohrung (20) befindlichen Ende eine zusätzliche axiale Sicherung des mindestens einen Spannelementes (11) bildet.

## Claims

1. Disc brake for a commercial vehicle, with
a) a brake caliper (1) that spans across a brake disc (8),
b) an applicator device arranged in the brake caliper (1) for pressing brake pads (9) against the brake disc (8),
c) at least two adjusting spindles (6) arranged parallel to and a distance apart from one another, mounted so that they can rotate in corresponding threads in a bridge (2) that can be actuated by means of the applicator device,
d) an adjustment device positioned in the brake caliper (1), with which, by virtue of axial displacement of the adjusting spindles (6), a wear-related change of an air gap between the brake pad (9) and the brake disc (8) can essentially be compensated,
e) a synchronizing device with a traction mechanism drive (3), with which the two adjusting spindles (6) can be displaced synchronously and which comprises a traction means (4) having two strands and two drive-wheels (5), which are connected in a rotationally fixed manner to the adjusting spindles (6) and against which the traction means (4) are in interlocking or frictional contact,
f) a clamping device in contact with the traction mean (4),
**characterised in that**
combined interlocking and frictional action between the traction means (4) and the clamping device clamps the clamping device between the traction means (4) and the bridge (2) in a self-locking manner.

2. Disc brake according to Claim 1, **characterised in that** the clamping device comprises at least one clamping element (11, 11') which is fixed in the bridge (2) so that it can swivel and which is in elastically sprung contact against the traction means (4).

3. Disc brake according to Claim 2, **characterised in that** the at least one clamping element (11, 11') comprises an integrated clamping sleeve (19) which is held in a bore (20) of the bridge (2) in such manner that it can swivel but is axially fixed.

4. Disc brake according to either of Claims 2 or 3, **characterised in that** the clamping sleeve (19) of the clamping element (11, 11') is provided with a through-going longitudinal slot and has a wrap-around angle > 180° about a central axis (27).

5. Disc brake according to any of Claims 2 to 4, **characterised in that** the clamping sleeve (19) of the clamping element (11) is connected to a body (29), and to the body (29) is connected a clamping arm (16) in contact with the traction means (4) and in the opposite direction thereto a supporting arm (17), which is in contact with a supporting surface (15) of the bridge (2).

6. Disc brake according to Claim 5, **characterised in that** the supporting surface (15) is formed by a step, and the supporting arm (17) is in contact with the end face of the stepped supporting surface (15).

7. Disc brake according to Claims 5 or 6, **characterised in that** the clamping arm (16) has a contact section (18) bent convexly in the direction of the traction means (4), which rests with friction force against the traction means (4).

8. Disc brake according to Claim 7, **characterised in that** the contact section (18) bent convexly in the direction of the traction means (4) rests in frictional contact against at least one roller (12) of the traction means (4).

9. Disc brake according to Claims 7 or 8, **characterised in that** at least in the area of the contact section (18) the width of the clamping arm (16) corresponds to the length of a roller (12) of the traction means (4) when the latter is in the form of a roller chain, and the rollers (12) have side-plates (13) that connect them to one another and form an axial end-stop for the positive locking of the at least one clamping element (11).

10. Disc brake according to any of Claims 5 to 9, **characterised in that** the clamping arm (16) has an aperture for the engagement of a fitting tool for the assembly of a closed traction means (4).

11. Disc brake according to any of Claims 2 to 10, **characterised in that** when two clamping elements (11) are used, each of which is respectively associated with a drive-wheel (5), the clamping elements are formed mirror-symmetrically.

12. Disc brake according to Claim 11, **characterised in that** the two clamping elements (11) are formed mirror-symmetrically relative to a plane perpendicular to the central axis (27) of the integrated clamping sleeve (19).

13. Disc brake according to any of Claims 7 to 12, **characterised in that** the contact section (18) of the at least one clamping element (11) is in contact with the run-in or run-out area of the traction means (4) relative to the drive-wheel (5).

14. Disc brake according to any of Claims 2 to **4,characterised in that** the clamping sleeve (19) of the clamping element (11') is connected to a body (29), and to the body (29) is connected a clamping arm (16) a supporting section (17a) which is in contact with a supporting surface (15') on the bridge (2), and the supporting section (17a) is connected to a spring arm (32) which is in contact with the traction means (4).

15. Disc brake according to Claim 14, **characterised in that** the supporting surface (15') is formed by a step and the supporting section (17a) rests against the end face of the stepped supporting surface (15').

16. Disc brake according to Claims 14 or 15, **characterised in that** the spring arm (32) has a contact section (18) bent convexly in the direction of the traction means (4), which is in frictional contact against the traction means (4).

17. Disc brake according to Claim 16, **characterised in that** the contact section (18) bent convexly in the direction of the traction means (4) is in frictional contact with at least one roller (12) of the traction means (4).

18. Disc brake according to Claims 16 or 17, **characterised in that** at least in the area of the contact section (18) the width of the spring arm (32) corresponds to the length of a roller (12) of the traction means (4) when the latter is in the form of a roller chain, and the rollers (12) have side-plates (13) that connect them to one another and form an axial end-stop for the positive locking of the at least one clamping element (11').

19. Disc brake according to any of Claims 3 to 18, **characterised in that** the clamping sleeve (19) of the at least one clamping element (11, 11') is connected by friction force to a dowel pin (21) which is inserted into and can swivel in the bore (20) of the bridge (20).

20. Disc brake according to Claim 19, **characterised in that** with its end located in the bore (20) the dowel pin (21) forms an additional means for the axial securing of the at least one clamping element (11).

## Revendications

1. Frein à disque pour un véhicule utilitaire, comprenant
a) un étrier (1) de frein chevauchant un disque (8) de frein,
b) un dispositif de serrage monté dans l'étrier (1) de frein pour pousser des garnitures (9) de frein sur le disque (8) de frein,
c) au moins deux broches (6) de réglage, parallèles et à distance l'une de l'autre, montées tournante en correspondance de filetage dans un pontet (2) pouvant être actionné au moyen du dispositif de serrage,
d) un dispositif de rattrapage, qui est placé dans l'étrier (1) de frein et par lequel, par un déplacement axial des broches (6) de réglage, une modification, due à l'usure d'un jeu de garnitures entre la garniture (6) de frein et le disque (8) de frein, peut être sensiblement compensée,
e) un dispositif de synchronisation, ayant une transmission (3) par moyen de traction, par lequel les deux broches (6) de réglage peuvent être déplacées en synchronisme et le un moyen (4) de traction a deux brins ainsi que deux roues (5) motrices, qui sont reliés, sans possibilité de torsion, aux broches (6) de réglage et auxquelles s'applique, à complémentarité de forme ou par friction, le moyen (4) de traction,
f) un dispositif de blocage s'appliquant au moyen (4) de traction,
**caractérisé en ce que**
une application combinée de forme et de force, entre le moyen (4) de traction et le dispositif de blocage, bloque à auto-verrouillage le dispositif de blocage entre le moyen (4) de traction et le pontet (2).

2. Frein à disque suivant la revendication 1, **caractérisé en ce que** le dispositif de blocage a au moins un élément (11, 11') de blocage, qui est fixé de manière à pouvoir pivoter dans le pontet (2) et qui s'applique élastiquement au moyen (4) de traction.

3. Frein à disque suivant la revendication 2, **caractérisé en ce que** le au moins un élément (11, 11') de blocage a un manchon (19) de blocage intégré, qui est monté dans un trou (20) du pontet (2), de manière à pouvoir pivoter et à être immobilisé axialement.

4. Frein à disque suivant l'une des revendications 2 ou 3, **caractérisé en ce que** le manchon (19) de blocage de l'élément (11, 11') de blocage est pourvu d'une boutonnière traversante et a un angle d'enroulement plus grand que 180° autour d'un axe (27) médian.

5. Frein à disque suivant l'une des revendications 2 à 4, **caractérisé en ce que** le manchon (19) de blocage de l'élément (11) de blocage est relié à une pièce (29), un bras (16) de blocage s'appliquant au moyen (4) de traction et, en sens contraire à cela, un bras (17) d'appui, qui s'applique à la surface (15) d'appui du pontet (2), se raccordant à la pièce (29).

6. Frein à disque suivant la revendication 5, **caractérisé en ce que** la surface (15) d'appui est formée d'un étagement, le bras (17) d'appui s'appliquant à la surface frontale de la surface (15) d'appui étagée.

7. Frein à disque suivant la revendication 5 ou 6, **caractérisé en ce que** le bras (16) de blocage a une partie (18) de contact convexe dans la direction du moyen (4) de traction, qui s'applique à coopération de force au moyen (4) de traction.

8. Frein à disque suivant la revendication 7, **caractérisé en ce que** la partie (18) de contact convexe dans la direction du moyen (4) de traction s'applique à coopération de force à au moins un galet (12) du moyen (4) de traction.

9. Frein à disque suivant la revendication 7 ou 8, **caractérisé en ce que** le bras (16) de blocage correspond, au moins dans la région de la partie (18) de contact dans sa largeur, à la longueur d'un galet (12) du moyen (4) de traction lorsque celui-ci est constitué sous la forme d'une chaîne de galets, les galets, formant des d'éclisses (13) reliant entre eux les galets (12), formant une butée axiale pour une application à complémentarité de forme du au moins un élément (11) de blocage.

10. Frein à disque suivant l'une des revendications 5 à 9, **caractérisé en ce que** le bras (18, 16) de blocage a une traversée (23) pour l'insertion d'un outil de montage d'un moyen (4) de traction fermé.

11. Frein à disque suivant l'une des revendications 2 à 10, **caractérisé en ce que**, lorsque l'on utilise deux éléments (11) de blocage, auxquels est associée respectivement une roue (5) motrice, les éléments (11) de blocage sont constitués en étant symétriques comme en un miroir.

12. Frein à disque suivant la revendication 11, **caractérisé en ce que** les deux éléments (11) de blocage sont symétriques comme en un miroir par rapport à un plan perpendiculaire à l'axe (27) médian du manchon (19) de blocage intégré.

13. Frein à disque suivant l'une des revendications 7 à 12, **caractérisé en ce que** la partie (18) de contact du au moins un élément (11) de blocage s'applique à la roue (5) motrice dans la région d'entrée ou de sortie du moyen (4) de traction.

14. Frein à disque suivant l'une des revendications 2 à 4, **caractérisé en ce que** le manchon (19) de blocage d'un élément (11') de blocage est relié à une pièce (29), dans lequel, à la pièce (29) se raccorde un bras, (16) de blocage, ayant une partie (17a) d'appui s'appliquant au pontet (2) sur une surface (15') d'appui, la partie (17a) d'appui étant reliée à un bras (32) de ressort s'appliquant au moyen (4) de traction.

15. Frein à disque suivant la revendication 14, **caractérisé en ce que** la surface (15') d'appui est formée par un étagement, la partie (17a) d'appui s'appliquant à la surface frontale de la surface (15') d'appui étagée.

16. Frein à disque suivant la revendication 14 ou 15, **caractérisé en ce que** le bras (32) de ressort a une partie (18) de contact convexe dans la direction du moyen (4) de traction, qui s'applique à coopération de force au moyen (4) de traction.

17. Frein à disque suivant la revendication 16, **caractérisé en ce que** la partie (18) de contact convexe dans la direction du moyen (4) de traction s'applique à coopération de force à au moins un galet (12) du moyen (4) de traction.

18. Frein à disque suivant la revendication 16 ou 17, **caractérisé en ce que** le bras (32) de ressort correspond, au moins dans la région de la partie (18) de contact dans sa largeur, à la longueur d'un galet (12) du moyen (4) de traction lorsque celui-ci est constitué sous la forme d'une chaîne de galets, des éclisses (13), reliant entre eux les galets (12), formant une butée axiale pour une application à complémentarité de forme du au moins un élément (11') de blocage.

19. Frein à disque suivant l'une des revendications 3 à 18, **caractérisé en ce que** le manchon (19) de blocage du au moins un élément (11, 11') de blocage est, par un goujon (21) d'assemblage, inséré à frottement avec possibilité de pivoter dans le trou (20) du pontet (2).

20. Frein à disque suivant la revendication 19, **caractérisé en ce que** le goujon (21) d'assemblage forme, par son extrémité se trouvant dans le trou (20), une fixation axiale supplémentaire du au moins un élément (11) de blocage.
